# EUROPÄISCHE PATENTSCHRIFT

(11) **EP 0 722 867 B1**
(45) Veröffentlichungstag und Bekanntmachung des Hinweises auf die Patenterteilung: **27.10.1999**
(21) Anmeldenummer: 96100459.5
(22) Anmeldetag: 13.01.1996
(51) Int. Cl.: B60T 1/087

(54) **Antriebseinheit mit einer Brennkraftmaschine und einem hydrodynamischen Retarder**
Drive unit with an internal combustion engine and a hydrodynamic retarder.
Unité d'entraînement avec un moteur à combustion interne et un ralentisseur hydrodynamique.

(30) Priorität: 23.01.1995 DE 19501853
(43) Veröffentlichungstag der Anmeldung: 24.07.1996
(73) Patentinhaber: Voith Turbo Beteiligungs GmbH, 89522 Heidenheim (DE)
(72) Erfinder: Friedrich, Jürgen, D-74564 Crailsheim (DE); Vogelsang, Klaus, D-74564 Crailsheim (DE); Heilinger, Peter, D-74589 Satteldorf (DE); Gebhardt, Hans, D-90759 Langenzenn (DE); Möller, Heribert, D-91623 Sachsen (DE)
(74) Vertreter: Dr. Weitzel & Partner

(56) Entgegenhaltungen:
- DE-A- 1 780 730
- DE-A- 1 929 484
- DE-A- 1 946 167
- DE-C- 3 301 560
- DE-C- 3 713 580
- GB-A- 2 063 420
- US-A- 3 720 372

## Beschreibung

Die Erfindung betrifft eine Antriebseinheit, insbesondere für ein Kraftfahrzeug, gemäß dem Oberbegriff von Anspruch 1.

Eine solche Antriebseinheit ist aus DE-A-1 946 167 bekanntgeworden.

Retarder werden bei schweren Fahrzeugen vor allem eingesetzt, um die insbesondere bei Bremsung aus hoher Fahrgeschwindigkeit (Anpassungsbremsung) anfallende kinetische Bremsenergie aufzunehmen und in Wärme umzusetzen, aber auch für geforderte Dauerbremsleistungen sind Retarder gut geeignet, beispielsweise bei einer konstanten Geschwindigkeit von 30 km/h und bei einem Gefälle von 7 %. Als Betriebsflüssigkeit dient in der Regel Öl. Die im Retarder an die Betriebsflüssigkeit übergegangene Wärme muß mittels eines speziellen Wärmetauschers dem Kühlmittel oder der Umgebungsluft zugeführt werden.

Der aus der US-PS 3 720 372 bekannte Retarder ist in den Antriebsmotor integriert, dauernd mit der Kurbelwelle verbunden und stets vom Kühlmittel der Kühleinrichtung durchströmt. Dabei dient der Rotor des Retarders als Umwälzpumpe anstelle einer gesonderten Kühlmittelpumpe. Der Zweck dieser Einrichtung besteht darin, mittels des Retarders das Kühlmittel aufzuheizen, um den Fahrgast-Innenraum zu erwärmen. Diesem Zweck dient auch eine am Retarder angeordnete Steuereinrichtung, die lediglich die Verteilung des Kühlmittels in Abhängigkeit von dessen Temperatur in einer Bypaß-Leitung durch den Kühler leitet.

Aus der DE-PS 33 01 560 ist ferner ein Retarder bekannt, der über eine schaltbare Kupplung mit der Kurbelwelle des Antriebsmotors und den Treibrädern des Fahrzeuges verbunden ist. Die Aufgabe des Retarders ist jedoch nicht die Aufnahme und Umsetzung hoher kinetischer Bremsenergie des Fahrzeuges in Wärme. Der Retarder wird ausschließlich als Heizgerät betrieben, wobei die Heizleistung unter Berücksichtigung einer zur Verfügung stehenden Antriebsleistung gesteuert werden soll. Das Kühlmittel des Motors ist gleichzeitig die Betriebsflüssigkeit des Retarders.

Ein aus der DE-AS 1 946 167 (US-PS 3 650 358) bekannter Retarder wird von der Kurbelwelle einer Verbrennungskraftmaschine angetrieben, deren Kühlmittel auch als Betriebsflüssigkeit für den Retarder dient. Der Vorteil dieser Betriebsweise liegt darin, daß die anfallende Wärme unmittelbar in dem dem Kühler zugeleiteten Kühlmittel entwickelt wird und ein Wärmetauscher zwischen zwei Flüssigkeiten entbehrlich ist. Die Lagerung des Rotors erfolgt mit einem Wälzlager und die Abdichtung zwischen Gestell und Rotorwelle ist mit zwei Lippendichtungen ausgeführt.

Bei Antriebseinheiten dieser Gattung ist man bestrebt, die axiale Baulänge sowie das Gewicht so gering wie möglich zu halten, besonders dann, wenn die Antriebseinheit für ein Kraftfahrzeug bestimmt ist. Dies wurde bei den bisher bekannten Antriebseinheiten nicht in wünschenswertem Maße erreicht.

Der Erfindung liegt die Aufgabe zugrunde, eine Antriebseinheit gemäß dem Oberbegriff von Anspruch 1 derart zu gestalten, daß die axiale Baulänge sowie das Gewicht geringer sind als bei den bekannten Antriebseinheiten.

Diese Aufgabe wird durch die Merkmale von Anspruch 1 gelöst. Hierdurch wird im einzelnen folgendes erreicht:
* Durch die fliegende Lagerung vom Rotor des Retarders entfällt ein besonderes Lager (oder gar zwei besondere Lager) für den Rotor des Retarders. Hierdurch verringert sich die axiale Baulänge.
* Auch bei einer vorgegebenen Brennkraftmaschine läßt sich der Raum zwischen Lüfter und Kurbelgehäuse auf der Frontseite der Brennkraftmaschine durch Anordnung des Retarders ausnutzen, ohne daß das Kurbelgehäuse und der Lüfter wesentlich verändert werden müssen.

Die Erfindung ist anhand der Zeichnung näher erläutert. Darin ist im einzelnen folgendes dargestellt:
Figur 1 zeigt eine Antriebseinheit in einer Seitenansicht, und zwar teilweise in einem Axialschnitt gemäß der Schnittebene A-A in Figur 2.
Figur 2 zeigt dieselbe Antriebseinheit in einer Draufsicht in Richtung auf die Motorwelle bei abgenommenen Lüfterrad; der Flugkreis des Lüfterrades ist strichpunktiert angedeutet.
Figur 3 ist eine vergrößerte Schnittansicht gemäß der Schnittebene B-B in Figur 2.
Figur 4 zeigt den Retarder in einer Draufsicht in Richtung Motorwelle.
Figur 5 zeigt in einer Ansicht analog Figur 2 einen Zwischenkörper zwischen Kurbelgehäuse und Retarder.
Figur 6 zeigt einen Ausschnitt aus Figur 1 in vergrößerter Darstellung.
Figur 7 zeigt den Gegenstand von Figur 2 in einer Schnittansicht C-C und in vergrößerter Darstellung.
Figur 8 zeigt einen Ausschnitt aus dem Gegenstand von Figur 1 in vergrößerter Darstellung.

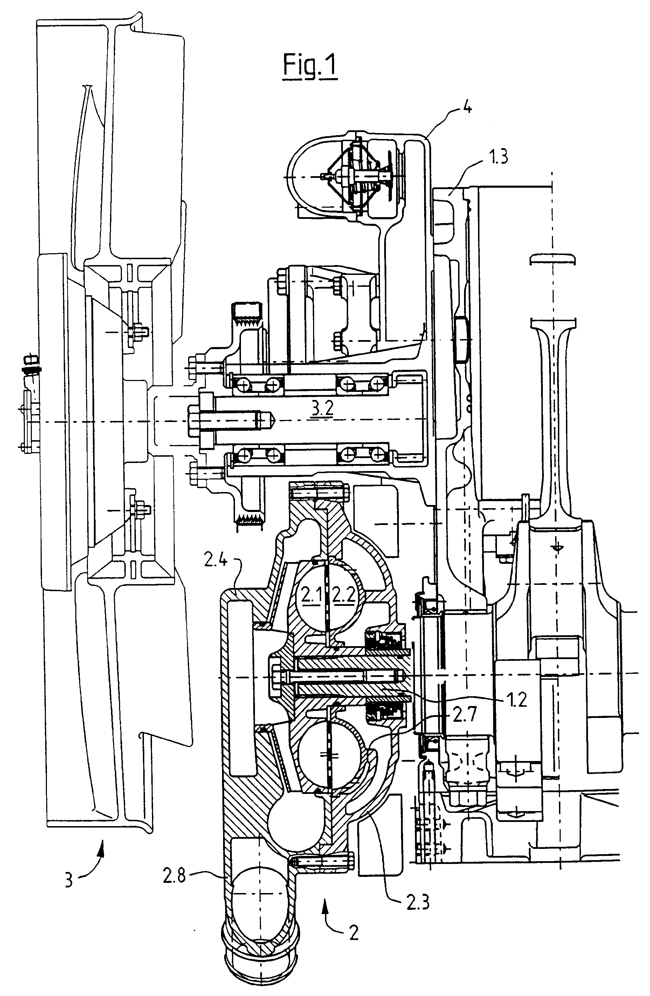

In Figur 1 sind vom Motor lediglich einige wenige Teile dargestellt, u.a. die Kurbelwelle 1, eine Pleuelstange 1.1 sowie ein stirnseitig an der Kurbelwelle 1 angeschraubter Wellenzapfen 1.2 sowie ein Kurbelgehäuse 1.3.

In Figur 1 links von Kurbelgehäuse 1.3 befindet sich ein Retarder 2, ferner ein Lüfter 3.

Der Retarder 2 weist ein Rotorschaufelrad 2.1 und ein Statorschaufelrad 2.2 auf. Das Rotorschaufelrad ist auf dem Wellenzapfen 1.2 fliegend gelagert. Der Retarder weist ein Gehäuse auf, das aus einem das Statorschaufelrad 2.2 umgebenden Glocke 2.3 aufgebaut ist, ferner aus einem Deckelkörper 2.4. Der Wellenzapfen 1.2 trägt ferner eine Dämpfungseinrichtung 2.5, die mit dem Wellenzapfen 1.2 drehfest verbunden ist.

Der Lüfter 3 ist von der Kurbelwelle 1 des Motors angetrieben, und zwar über einen hier nur teilweise dargestellten Getrieberädersatz. Wie man sieht, verläuft die Lüfterwelle 3.2 parallel zum Wellenzapfen 1.2.

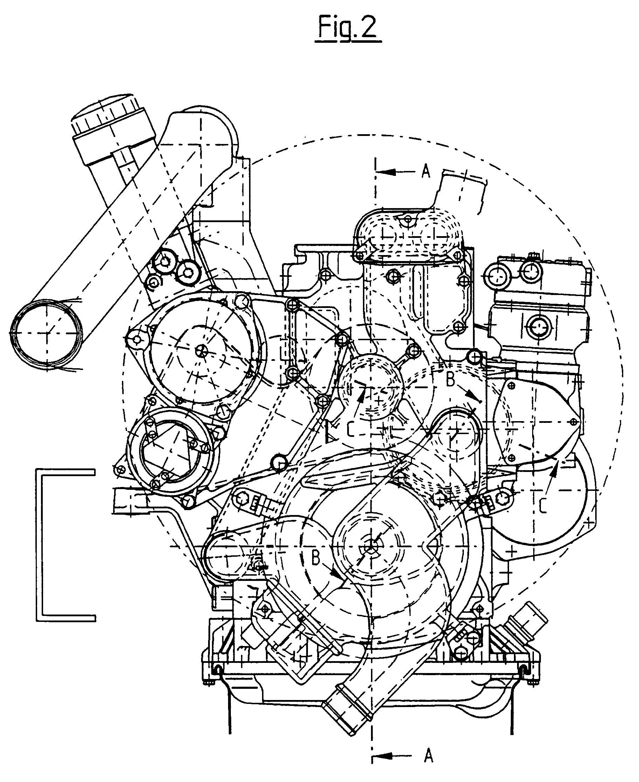

Die Anordnung ist derart getroffen, daß der Retarder 2 praktisch den gesamten Raum ausfüllt, der begrenzt wird durch die dem Retarder zugewandte Stirnfläche des Kurbelgehäuses 1.3 bzw. durch den Getrieberädersatz, der den Lüfter 3 antreibt, ferner durch die Lüfterwelle 3.2 und schließlich durch die Hinterkante des Lüfterrades 3.1. Dabei befindet sich Retarder 2 mit dem Deckelkörper 2.4 in der Draufsicht gemäß Figur 2 innerhalb des Flugkreises des Lüfterrades 3.1. Somit wird der Raum in optimaler Weise ausgenutzt.

Ein ganz entscheidender Vorteil dieser Anordnung von Retarder 2 in dem genannten Raum zwischen Kurbelgehäuse 1.3, Lüfterwelle 3.2 und Lüfterrad 3.1 besteht in folgendem: Der vom Lüfterrad 3.1 erzeugte Luftstrom führt aufgrund der räumlichen Nähe zwischen Lüfterrad 3.1 und Retarder 2 von dessen Außenflächen Wärme ab, die beim Bremsbetrieb entsteht. Der dem Retarder zugeordnete Wärmetauscher wird somit deutlich entlastet.

Da Retarder 2 unmittelbar vor dem Motor sitzt (Kaltseite der Motorkühlung), kann man die Wassermasse, die sich zwischen Retardereingang und Kühler befindet, ferner die Motor-Schmierölmasse sowie anteilig die Metallmasse des Kühlsystems einschließlich des Motors zur kapazitiven Energieaufnahme nutzen. Dadurch vergrößert sich die dem Retarder zur Verfügung stehende Wärmekapazität. Die Bremsleistung kann kurzfristig höher als die kontinuierliche Wärmeabgabe des Fahrzeugkühlers sein.

Durch die kompakte Anordnung gemäß der Erfindung sind die notwendigen Rohrleitungen auf eine minimale Länge reduziert. Damit sind auch die Probleme minimiert, die sich bei konventionellen Antriebseinheiten aufgrund der verhältnismäßig langen Wege der Rohrleitungen ergeben.

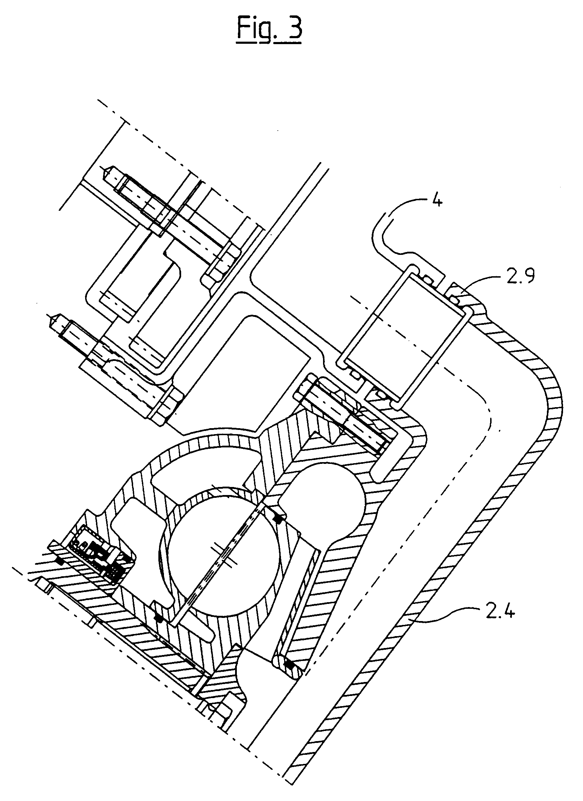

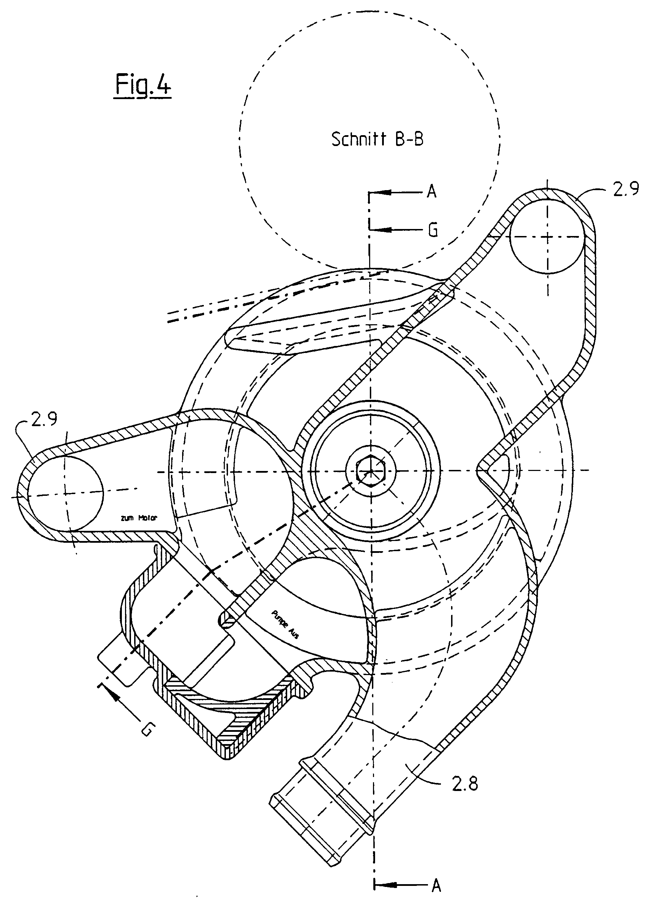

Der genannte Deckelkörper 2.4 hat mehrere Funktionen:
* Er bildet einen Teil des Retardergehäuses, indem er das Rotorschaufelrad 2.1 umschließt.
* Als Hohlkörper bildet er eine Sammelkammer mit drei Anschlußstutzen, nämlich zwei Zuläufen und einem Ablauf für das Medium, das aufgrund der Konzeption dieser Antriebseinheit gleichzeitig Kühlmedium und Arbeitsmedium ist (sogenannter Wasserpumpenretarder); der eine der drei Anschlüsse, nämlich Anschlußstutzen 2.8, der Kühlwasser vom Fahrzeugkühler heranführt, ist in Figur 1 dargestellt, und die beiden anderen Anschlüsse 2.9 in den Figuren 3 und 4.
* Der Deckelkörper 2.4 stützt sich entweder direkt oder über die Glocke 2.3 am Kurbelgehäuse 1.3 oder anderweitig an der festen Umgebung ab und bildet damit eine Drehmomentenstütze.
* Der Deckelkörper 2.4 ist mit dem Statorgehäuse ("Glocke") 2.3 verbunden. Er trägt somit das Statorgehäuse 2.3 oder umgekehrt dieses ihn. Außerdem dient er für dieses Statorgehäuse 2.3 oder dieses für ihn als Zentrierorgan, womit er gleichzeitig die Gleitringdichtung zwischen Statorgehäuse 2.3 und Wellenzapfen 1.2 zentrieren kann.
* Der Deckelkörper trägt das Statorschaufelrad 2.2; er ist auch mit diesem durch eine Steckverbindung verbunden und stützt sich axial auf den Paßflächen 2.7 ab.

Die Vorteile, die sich aus dieser Anordnung ergeben, sind vielfältig. Vor allem tragen die Gestaltung und Anordnung des Deckelkörpers zur Kompaktheit der Bauweise bei. Die gesamte Antriebseinheit ist wartungsfreundlich, weil nämlich durch Abnehmen des Lüfterrades 3.1 und ggf. des Deckelkörpers 2.4 ein freier Zugang zu allen entscheidenden Teilen gegeben ist.

Wenn auch im dargestellten Ausführungsbeispiel kein besonderer Wellenzapfen 1.2 vorgesehen ist, so ist es natürlich auch möglich. Im Beispiel ist der Wellenzapfen an die Kurbelwelle 1 angeformt, so daß Wellenzapfen 1.2 und Kurbelwelle 1 ein einziges Bauteil bilden.

Die Figur 3 läßt nochmals die entscheidenden Bauteile erkennen, soweit sich diese auf den Aufbau des Retarders beziehen. Insbesondere erkennt man hieraus, daß der Deckelkörper 2.4 mittels Steckverbindungen an die entsprechenden Rohrleitungsanschlüsse angeschlossen ist.

Wie sich aus dem vorstehenden ergibt, ist der Rotor 2.1 des Retarders 2 vorzugsweise fliegend gelagert; er ist somit vom Kurbelwellenlager getragen.

In besonders geschickter Weise haben die Erfinder einen Zwischenkörper 4 vorgesehen. Dieser befindet sich zwischen Kurbelgehäuse 1.3 und Lüfter 3. Er ist am Kurbelgehäuse 1.3 gelagert und schließt sich unmittelbar an den Deckelkörper 2.4 an. Er trägt eine Vielzahl von Elementen. Auf jeden Fall trägt er den kompletten Lüfter 3 samt dessen Welle 3.2 mit Laufrad 3.1. Er zentriert außerdem das Gehäuse 2.3 und 2.4 des Retarders 2. Ferner kann er weitere Aggregate tragen, wie beispielsweise Thermostate.

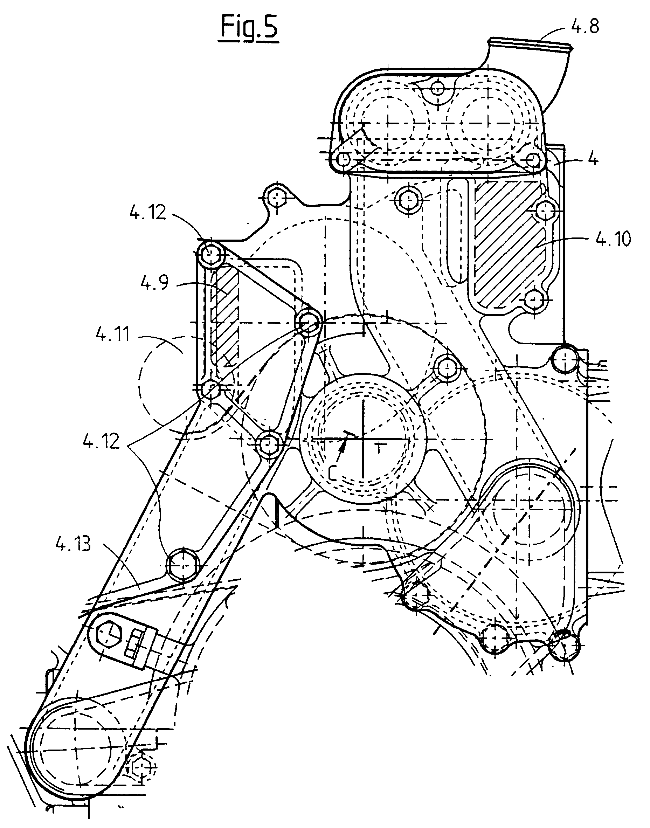

Die Umrisse des Zwischenkörpers erkennt man aus Figur 5 - dort in starken Linien angedeutet. Man erkennt daraus im einzelnen die Eintrittsöffnung 4.9 für die Kühlflüssigkeit zum Motor, ferner die Austrittsöffnung 4.10 aus dem Kurbelgehäuse. Weiterhin erkennt man eine Spannrolle 4.11 für den Keilriemen der Hilfsmaschinen. Ferner sind Anlenkpunkte 4.12 für einen Tragbock 4.13 für Hilfsaggregate zu erkennen. Rechts oben in Figur 5 befindet sich ein Auslaßstutzen 4.8 für Kühlflüssigkeit, die zum Fahrzeugkühler strömt.

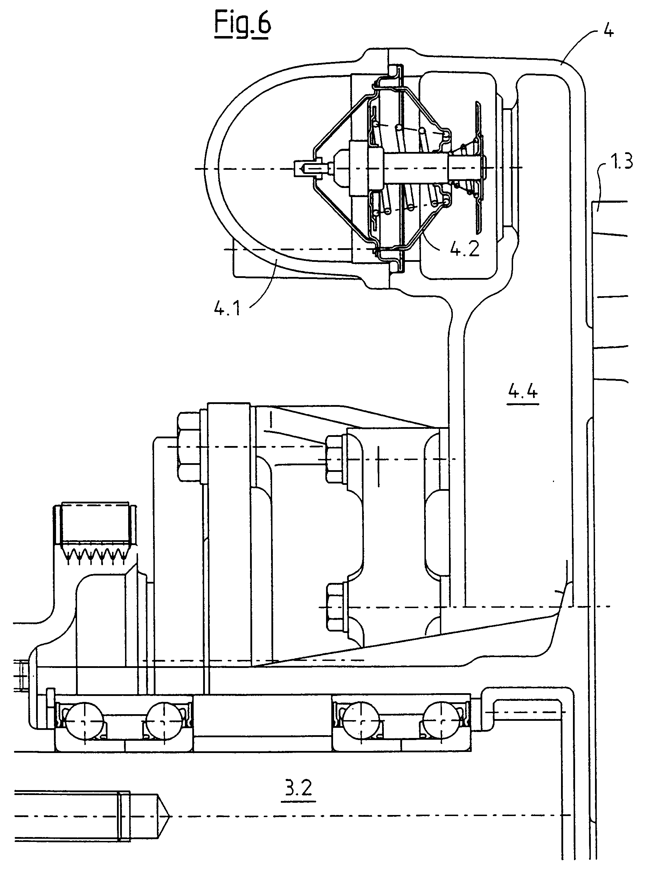

Figur 6 zeigt das Umfeld im Bereich der Lüfterwelle 3.2. Man erkennt im einzelnen wieder den Zwischenkörper 4, das Kurbelgehäuse 1.3, ein Thermostatgehäuse 4.1 sowie einen der Thermostaten 4.2, außerdem einen Kanal 4.4 als Kurzschlußverbindung für Flüssigkeit zum Retarder 2.

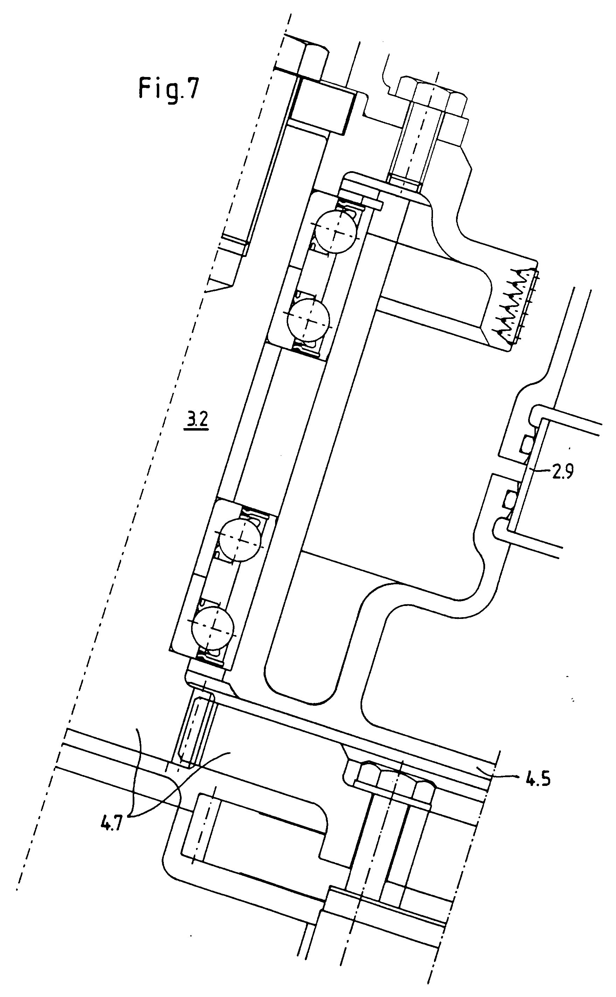

Aus Figur 7 erkennt man u.a. ein Gehäuseteil 4.5 als Rädertriebabschluß, ferner die Antriebszahnräder 4.7 zum Antrieb des Lüfters 3, die Lüfterwelle 3.2 sowie die Steckverbindung 2.9.

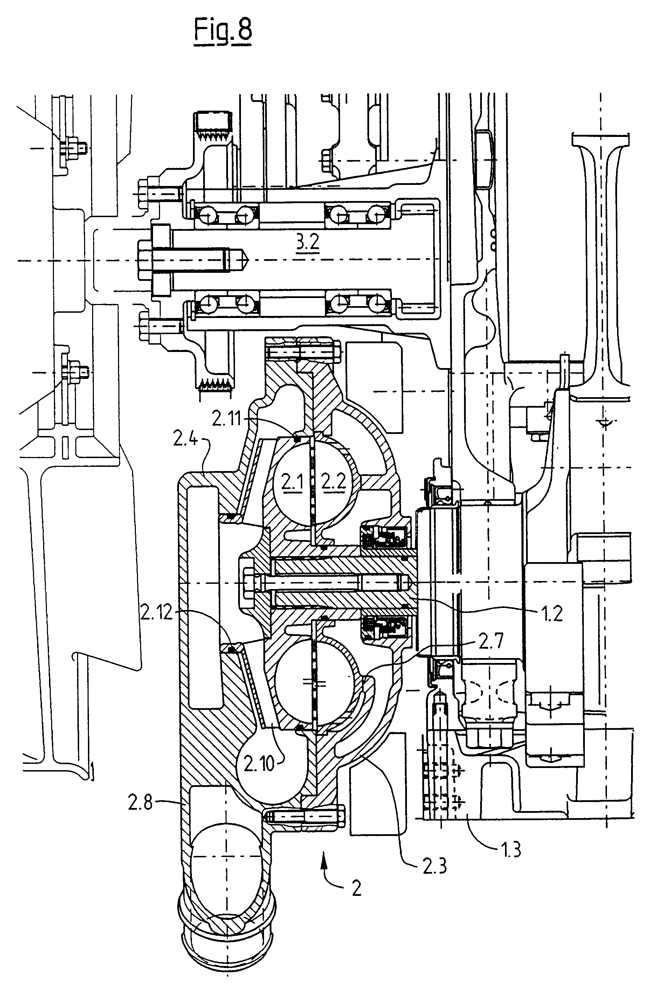

Figur 8 läßt den Retarder 2 genauer erkennen. Wie man sieht, befindet sich das Statorschaufelrad 2.2 zwischen dem Kurbelgehäuse 1.3 und dem Rotorschaufelrad 2.1. Anders ausgedrückt ist Statorschaufelrad 2.2 dem Motor näher und Rotorschaufelrad 2.1 dem Motor ferner. Der Deckelkörper 2.4 ist mit der Glocke 2.3 fest verschraubt.

Eine wichtige Besonderheit besteht darin, daß das Rotorschaufelrad 2.1 auf seiner Rückseite - die dem Deckelkörper 2.4 zugewandt ist - Pumpenschaufeln 2.10 trägt. Das Rotorschaufelrad 2.1 übt somit nicht nur seine Funktion als Rotor des Retarders 2 aus, sondern auch gleichzeitig die einer Pumpe.

Selbstverständlich sind die notwendigen Abdichtungen zwischen den relativ zueinander umlaufenden Teilen vorgesehen - siehe beispielsweise die Dichtungsringe 2.11 und 2.12 zwischen Rotorschaufelrad 2.1 und Deckelkörper 2.4.

## Patentansprüche

1. Antriebseinheit, insbesondere für ein Kraftfahrzeug
1.1 mit einem Verbrennungsmotor und einem Getriebe;
1.2 mit einem hydrodynamischen Retarder (2), der einen Rotor (2.1) und einen Stator (2.3) aufweist;
1.3 der Rotor (2.1) des Retarders (2) ist auf der Motorwelle (1) bzw. auf einem mit dieser koaxialen Wellenzapfen (1.2) gelagert;
1.4 der Stator (2.2) des Retarders ist - in Achsrichtung gesehen - zwischen Kurbelgehäuse (1.3) und Rotor (2.1) angeordnet;
dadurch gekennzeichnet, daß der Rotor (2.1) auf seiner vom Stator (2.3) abgewandten Seite Pumpenschaufeln (2, 10) zum Umpumpen eines Kühlmittels des Kühlmittelkreislaufes aufweist.

2. Antriebseinheit nach Anspruch 1, dadurch gekennzeichnet, daß der Rotor (2.1) fliegend gelagert ist.

3. Antriebseinheit nach Anspruch 1 oder 2, dadurch gekennzeichnet, daß der Stator (2.2) des Retarders (2) mit der festen Umgebung, insbesondere mit dem Kurbelgehäuse, zum Bilden einer Drehmomentenstütze drehfest verbunden ist.

4. Antriebseinheit nach einem der Ansprüche 1 bis 3, dadurch gekennzeichnet, daß das Statorgehäuse (2.2) zur Achse der Antriebseinheit eine im wesentlichen senkrechte Lasche aufweist, und daß die Lasche am Kurbelgehäuse derart fixiert ist, daß gleichzeitig eine Drehmomentenstütze als auch eine gegenseitige radiale Positionierung zwischen Stator (2.2) des Retarders (2) und Kurbelgehäuse gebildet wird.

5. Antriebseinheit nach einem der Ansprüche 1 bis 4, dadurch gekennzeichnet, daß die Welle des Retarders bzw. des Motors über den Retarder (2) auf dessen dem Motor abgewandten Seite hinausragt und eine Keilriemenscheibe für Hilfsantriebe trägt.

6. Antriebseinheit nach einem der Ansprüche 1 bis 5, dadurch gekennzeichnet, daß zwischen der Kurbelwelle (1) des Motors und dem Rotor (2.1) des Retarders (2) ein Getriebe, z.B. ein Planetengetriebe zum Übersetzen des Rotors (2.1) ins Schnelle geschaltet ist.

7. Antriebseinheit nach Anspruch 6, dadurch gekennzeichnet, daß das Kühlmittel des Kühlmittelkreislaufs gleichzeitig Arbeitsmittel des Retarders (2) ist.

## Claims

1. Drive unit, in particular for a motor vehicle,
1.1 with an internal combustion engine and a transmission;
1.2 with a hydrodynamic retarder (2), which has a rotor (2.1) and a stator (2.3);
1.3 the rotor (2.1) of the retarder (2) is disposed on the engine shaft (1) or on a journal (1.2) coaxial to this;
1.4 the stator (2.2) of the retarder is arranged between the crankcase (1.3) and the rotor (2.1) - viewed in axial direction;
characterised in that on its side remote from the stator (2.2), the rotor (2.1) has pump blades (2, 10) for circulating a coolant of the coolant circuit.

2. Drive unit according to Claim 1, characterised in that the rotor (2.1) is overhung.

3. Drive unit according to Claim 1 or 2, characterised in that the stator (2.2) of the retarder (2) is connected against rotation with the fixed surroundings, in particular with the crankcase, to form a torque support means.

4. Drive unit according to one of Claims 1 to 3, characterised in that the stator casing (2.2) has an essentially perpendicular clip relative to the axis of the drive unit, and that the clip is fixed to the crankcase such that a torque support means is formed at the same time as a mutual radial positioning between the stator (2.2) of the retarder (2) and the crankcase.

5. Drive unit according to one of Claims 1 to 4, characterised in that the shaft of the retarder or the engine projects beyond the retarder (2) on its side remote from the engine and bears a V-belt pulley for auxiliary drive.

6. Drive unit according to one of Claims 1 to 5, characterised in that a transmission, e.g. a planet gear, is geared up between the crankshaft (1) of the engine and the rotor (2.1) of the retarder (2) to gear the rotor (2.1).

7. Drive unit according to Claim 6, characterised in that the coolant of the coolant circuit is at the same time the operating medium of the retarder (2).

## Revendications

1. Unité d'entraînement, en particulier pour un véhicule automobile
1.1 avec un moteur à combustion interne et une boîte de transmission;
1.2 avec un ralentisseur hydrodynamique (2) qui présente un rotor (2.1) et un stator (2.3);
1.3 le rotor (2.1) du ralentisseur (2) est logé sur l'arbre moteur (1) ou sur un tourillon d'arbre (1.2) coaxial à celui-ci;
1.4 le stator (2.2) du ralentisseur est placé - vu dans la direction de l'axe - entre le carter du vilebrequin (1.3) et le rotor (2.1),
caractérisée en ce que le rotor (2.1) présente sur sa face opposée au stator (2.3) des aubages de pompe (2.10) pour le pompage d'un agent réfrigérant du circuit d'agent réfrigérant.

2. Unité d'entraînement selon la revendication 1, caractérisée en ce que le rotor (2.1) est logé en porte-à-faux.

3. Unité d'entraînement selon l'une des revendications 1 ou 2, caractérisée en ce que le stator (2.2) du ralentisseur (2) est relié de façon rigide à la torsion avec l'environnement fixe, en particulier avec le carter du vilebrequin pour former une bielle de réaction de couple.

4. Unité d'entraînement selon l'une des revendications 1 à 3, caractérisée en ce que le carter du stator (2.2) présente une patte pour l'essentiel verticale par rapport à l'axe de l'unité d'entraînement et que ladite patte est fixée sur le carter du vilebrequin de telle sorte qu'il se forme simultanément une bielle de réaction de couple, mais aussi un positionnement radial réciproque entre le stator (2.2) du ralentisseur (2) et le carter du vilebrequin.

5. Unité d'entraînement selon l'une des revendications 1 à 4, caractérisée en ce que l'arbre du ralentisseur ou du moteur sort du ralentisseur (2) sur sa face tournée vers le moteur et porte une poulie pour courroie trapézoïdale pour des entraînements auxiliaires.

6. Unité d'entraînement selon l'une des revendications 1 à 5, caractérisée en ce qu'une boîte de transmission, par ex. une transmission à train d'engrenages planétaire est montée entre le vilebrequin (1) du moteur et le rotor (2.1) du ralentisseur (2) pour assurer une multiplication de la vitesse du rotor (2.1).

7. Unité d'entraînement selon la revendication 6, caractérisée en ce que l'agent réfrigérant du circuit d'agent réfrigérant est simultanément le fluide de travail du ralentisseur (2).
